# EUROPEAN PATENT SPECIFICATION

(11) **EP 3 781 659 B1**
(45) Date of publication and mention of the grant of the patent: **17.08.2022**
(21) Application number: 19715488.3
(22) Date of filing: 08.04.2019
(51) Int. Cl.: C11D 3/37, C08G 73/02, C11D 3/386

(54) **COMPOSITIONS AND POLYMERS USEFUL FOR SUCH COMPOSITIONS**
ZUSAMMENSETZUNGEN UND FÜR SOLCHE ZUSAMMENSETZUNGEN NÜTZLICHE POLYMERE
COMPOSITIONS ET POLYMÈRES UTILES POUR DE TELLES COMPOSITIONS

(30) Priority: 19.04.2018 EP 18168323
(43) Date of publication of application: 24.02.2021
(73) Proprietor: BASF SE, 67056 Ludwigshafen am Rhein (DE)
(72) Inventor: MUELLER-CRISTADORO, Anna Maria, 49448 Lemfoerde (DE); GARCIA MARCOS, Alejandra, 67056 Ludwigshafen (DE)
(74) Representative: BASF IP Association
(86) International application number: PCT/EP2019/058764
(87) International publication number: WO 2019/201636

(56) References cited:
- WO-A1-2009/060409
- WO-A1-2017/005793
- US-A1- 2009 124 528
- US-A1- 2011 021 686
- US-A1- 2014 014 004

## Description

The present invention is directed towards compositions comprising
(A) at least one lipase,
(B) at least one branched polyetheramine polyol with a polydispersity (M_{w}/Mₙ) in the range of from 5 to 25, wherein said branched polyetheramine polyol is based on a polycondensation product of at least one trialkanolamine.

In addition, the present invention is directed towards polymers useful for such detergent compositions.

Laundry detergents have to fulfil several requirements. They need to remove all sorts of soiling from laundry, for example all sorts of pigments, clay, fatty soil, and dyestuffs including dyestuff from food and drinks such as red wine, tea, coffee, and fruit including berry juices. Laundry detergents also need to exhibit a certain storage stability. Especially laundry detergents that are liquid or that contain hygroscopic ingredients often lack a good storage stability.

Fatty soilings are still a challenge in automatic dishwashing. Although numerous suggestions have been made - polymers, enzymes, surfactants - solutions that work well are still of interest.

Highly branched polyetheramine polyols are known as adhesion promoters (primers), thixotropic agents or flow improvers, see, e. g., WO 2009/047269. In WO 2014/012812, certain polycondensation products of triethanolamine and their use in particular as pigment dispersants are disclosed.

It was therefore an objective to provide a detergent composition that fulfils the requirements discussed above. It was further an objective to provide ingredients that fulfil the above requirements, and it was an objective to provide a process to make such ingredients and detergent compositions.

Accordingly, the compositions defined at the outset have been found, hereinafter also referred to as inventive compositions or compositions according to the present invention.

Inventive compositions comprise
(A) at least one lipase, hereinafter also referred to as lipase (A). Examples are serine hydrolases.

"Lipases", "lipolytic enzyme", "lipid esterase", all refer to enzymes of EC class 3.1.1 ("carboxylic ester hydrolase"). Such a lipase (A) may have lipase activity (or lipolytic activity; triacylglycerol lipase, EC 3.1.1.3), cutinase activity (EC 3.1.1.74; enzymes having cutinase activity may be called cutinase herein), sterol esterase activity (EC 3.1.1.13) and/or wax-ester hydrolase activity (EC 3.1.1.50). Lipases (A) include those of bacterial or fungal origin.

Commercially available lipase (A) include but are not limited to those sold under the trade names Lipolase^{™}, Lipex^{™}, Lipolex^{™} and Lipoclean^{™} (Novozymes A/S), Lumafast (originally from Genencor) and Lipomax (Gist-Brocades/ now DSM).

In one aspect of the invention, a suitable lipase is selected from the following:
- lipases from *Humicola* (synonym *Thermomyces*), e.g. from *H. lanuginosa* (*T. lanuginosus*) as described in EP 258068, EP 305216, WO 92/05249 and WO 2009/109500 or from *H. insolens* as described in WO 96/13580,
- lipases derived from *Rhizomucor miehei* as described in WO 92/05249.
- lipase from strains of *Pseudomonas* (some of these now renamed to *Burkholderia*), e.g. from *P. alcaligenes* or *P. pseudoalcaligenes* (EP 218272, WO 94/25578, WO 95/30744, WO 95/35381, WO 96/00292), *P. cepacia* (EP 331376), *P. stutzeri* (GB 1372034), *P. fluorescens, Pseudomonas sp.* strain SD705 (WO 95/06720 and WO 96/27002), *P. wisconsinensis* (WO 96/12012), *Pseudomonas mendocina* (WO 95/14783), *P. glumae* (WO 95/35381, WO 96/00292)
- lipase from *Streptomyces griseus* (WO 2011/150157) and *S. pristinaespiralis* (WO 2012/137147), GDSL-type *Streptomyces* lipases (WO 2010/065455),
- lipase from *Thermobifida fusca*as disclosed in WO 2011/084412,
- lipase from *Geobacillus stearothermophilus* as disclosed in WO 2011/084417,
- *Bacillus* lipases, e.g. as disclosed in WO 00/60063, lipases from *B. subtilis* as disclosed in Dartois et al. (1992), Biochemica et Biophysica Acta, 1131, 253-360 or WO 2011/084599, *B. stearothermophilus* (JP S64-074992) or *B. pumilus* (WO 91/16422).
- Lipase from *Candida antarctica* as disclosed in WO 94/01541.
- cutinase from *Pseudomonas mendocina* (US 5389536, WO 88/09367)
- cutinase from *Magnaporthe grisea* (WO 2010/107560),
- cutinase from *Fusarum solani pisi* as disclosed in WO 90/09446, WO 00/34450 and WO 01/92502
- cutinase from *Humicola lanuginosa* as disclosed in WO 00/34450 and WO 01/92502

Suitable lipases (A) also include those referred to as acyltransferases or perhydrolases, e.g. acyltransferases with homology to *Candida antarctica* lipase A (WO 2010/111143), acyltransferase from *Mycobacterium smegmatis* (WO 2005/056782), perhydrolases from the CE7 family (WO 2009/67279), and variants of the *M. smegmatis* perhydrolase in particular the S54V variant (WO 2010/100028).

Suitable lipases include also those which are variants of the above described lipases and/or cutinases which have lipolytic activity. Such suitable lipase variants are e.g. those which are developed by methods as disclosed in WO 95/22615, WO 97/04079, WO 97/07202, WO 00/60063, WO 2007/087508, EP 407225 and EP 260105.

Suitable lipases (A) include also those that are variants of the above described lipases/cutinases which have lipolytic activity. Suitable lipase/cutinase variants include variants with at least 40 to 100% identity when compared to the full length polypeptide sequence of the parent enzyme as disclosed above. In one embodiment lipase/cutinase variants having lipolytic activity may be at least 40%, at least 45%, at least 50%, at least 55%, at least 60%, at least 65%, at least 70%, at least 75%, at least 80%, at least 85%, at least 90%, at least 91%, at least 92%, at least 93%, at least 94%, at least 95%, at least 96%, at least 97%, at least 98% or at least 99% identical when compared to the full length polypeptide sequence of the parent enzyme as disclosed above.

In another embodiment, inventive compositions comprise at least one lipase/cutinase variant comprising conservative mutations not pertaining the functional domain of the respective lipase/cutinase. Lipase/cutinase variants of such embodiments having lipolytic activity may be at least 40%, at least 45%, at least 50%, at least 55%, at least 60%, at least 65%, at least 70%, at least 75%, at least 80%, at least 85%, at least 90%, at least 91%, at least 92%, at least 93%, at least 94%, at least 95%, at least 96%, at least 97%, at least 98% or at least 99% similar when compared to the full length polypeptide sequence of the parent enzyme.

Lipases (A) have "lipolytic activity". The methods for determining lipolytic activity are well-known in the literature (see e.g. Gupta et al. (2003), Biotechnol. Appl. Biochem. 37, p. 63-71). E.g. the lipase activity may be measured by ester bond hydrolysis in the substrate para-nitrophenyl palmitate (pNP-Palmitate, C:16) and releases pNP which is yellow and can be detected at 405 nm.

Lipase variants may have lipolytic activity according to the present invention when said lipase variants exhibit at least 20%, at least 25%, at least 30%, at least 35%, at least 40%, at least 45%, at 10 least 50%, at least 55%, at least 60%, at least 65%, at least 70%, at least 75%, at least 80%, at least 85%, at least 90%, at least 95%, or 100% of the lipolytic activity of the respective parent lipase.

In one embodiment of the present invention, a combination of at least two of the foregoing lipases (A) may be used.

Lipase (A) may be used in its non-purified form or in a purified form, e.g. purified with the aid of well-known adsorption methods, such as phenyl sepharose adsorption techniques.

In one embodiment of the present invention, lipases (A) are included in inventive composition in such an amount that a finished inventive composition has a lipolytic enzyme activity in the range of from 100 to 0.005 LU/mg, preferably 25 to 0.05 LU/mg of the composition. A Lipase Unit (LU) is that amount of lipase which produces 1 µmol of titratable fatty acid per minute in a pH stat. under the following conditions: temperature 30° C.; pH=9.0; substrate is an emulsion of 3.3 wt. % of olive oil and 3.3% gum arabic, in the presence of 13 mmol/l Ca²⁺ and 20 mmol/l NaCl in 5 mmol/I Tris-buffer.

It is preferred to use a combination of lipase (A) and protease (D) in compositions, for example 1 to 2% by weight of protease (D) and 0.1 to 0.5% by weight of lipase (A).

In the context of the present invention, lipase (A) is deemed called stable when its enzymatic activity "available in application" equals 100% when compared to the initial enzymatic activity before storage. An enzyme may be called stable within this invention if its enzymatic activity available in application is at least 60%, at least 65%, at least 70%, at least 75%, at least 80%, at least 85%, at least 90%, at least 91%, at least 92%, at least 93%, at least 94%, at least 95%, at least 96%, at least 97%, at least 98%, at least 99%, or at least 99.5% when compared to the initial enzymatic activity before storage.

In one embodiment, lipolytic activity available after storage at 37°C for 30 days is at least 60% when compared to the initial lipolytic activity before storage.

Subtracting a% from 100% gives the "loss of enzymatic activity during storage" when compared to the initial enzymatic activity before storage. In one embodiment, an enzyme is stable according to the invention when essentially no loss of enzymatic activity occurs during storage, i.e. loss in enzymatic activity equals 0% when compared to the initial enzymatic activity before storage. Essentially no loss of enzymatic activity within this invention may mean that the loss of enzymatic activity is less than 30%, less than 25%, less than 20%, less than 15%, less than 10%, less than 9%, less than 8%, less than 7%, less than 6%, less than 5%, less

Inventive compositions further comprise
(B) at least one branched polyetheramine polyol with a polydispersity (M_{w}/Mₙ) in the range of from 5 to 25, wherein said branched polyetheramine polyol is based on a polycondensation product of at least one trialkanolamine, hereinafter also referred to as polyetheramine polyol (B) or inventive polyetheramine polyol (B). Polyetheramine polyol (B) is selected from branched polyetheramine polyols with a polydispersity (M_{w}/Mₙ) in the range of from 5 to 25, preferably from 5 to 20. Polyamine polyols are selected from polymeric products that have a backbone and branches that can carry alcoholic hydroxyl groups. In the backbone, there are amino groups, preferably tertiary amino groups, and ether groups.

In one embodiment of the present invention, the number-average molar weight Mₙ of polyetheramine polyol (B) is in the range of from 3,750 to 50,000 g/mol, preferably in the range of from 3,900 to 10,000 g/mol, as measured by means of gel permeation chromatography using hexafluoroisopropanol/0.05 % by weight CF₃COOK as the mobile phase and polymethylmethacrylate (PMMA) as standard.

In one embodiment of the present invention, the weight-average molar weight, M_{w}, of polyetheramine polyol (B) is in the range of from 10,000 to 90,000 g/mol, preferably from 11,000 to 80,000 g/mol and even more preferred from 15,000 to 80,000 g/mol. M_{w} is advantageously determined by means of gel permeation chromatography using 0.05 % by wt. CF₃COOK in hexafluoroisopropanol as the mobile phase and PMMA as standard.

The polydispersity of polyetheramine polyol (B) is then determined by dividing M_{w} by Mₙ.

In one embodiment of the present invention, polyetheramine polyol (B) has at least three, preferably at least six, more preferably at least ten, terminal functional groups per molecule. Functional groups in the context of polyetheramine polyol (B) are, for example, amino groups, preferably secondary amino groups, and preferably hydroxyl groups.

In one embodiment of the present invention, polyetheramine polyol (B) bears one or more N-morpholino-groups per molecule.

In principle there is no upper limit on the number of terminal or pendent functional groups, although products with a very large number of functional groups may display unwanted properties, such as high viscosity or poor solubility, for example. In one embodiment of the present invention, polyetheramine polyol (B) has no more than 500 terminal functional groups per molecule, preferably no more than 100.

Polyetheramine polyol (B) can be made by polycondensation of at least one trialkanolamine, for example at least one tri-C₂-C₄-alkanol-amine, with the alkanol groups in trialkanolamine being different or preferably identical. Trialkanolamines can be subjected to polycondensation or to co-polycondensation, either with one or more trialkanolamine or with one or more dialkanolamines. Examples for suitable trialkanolamines are triethanolamine, tripropanolamine, triisopropanolamine and tributanolamine. Examples for suitable dialkanolamines are N,N-diethanolamine, N,N-di-n-propanolamine, N,N-diisopropanolamine, N,N-di-n-butanolamine, N,N'-C₂-C₈-ω-hydroxyalkylpiperidine, and polyetherols being based on ethylene oxide and/or propylene oxide.

In one embodiment of the present invention, polyetheramine polyol (B) can be obtained by polycondensation of at least one compound selected from triethanolamine, triisopropanolamine and tri-n-propanolamine, or mixtures of at least two compounds selected from triethanolamine, triisopropanolamine and tri-n-propanolamine. Preference is given to make polyetheramine polyol (B) by polycondensation of either triethanolamine or triisopropanolamine or a mixture of triethanolamine and triisopropanolamine, without using a diol.

Polycondensation products of trialkanolamines and poly-co-condensation products of trialkanolamine described above can be used as polyetheramine polyol (B) without chemical modification or derivatization.

Polyetheramine polyol (B) dissolves readily in a variety of solvents, such as water, alcohols, such as methanol, ethanol, n-butanol, alcohol/water mixtures, acetone, 2-butanone, ethyl acetate, butyl acetate, methoxypropyl acetate, methoxyethyl acetate, tetrahydrofuran, dimethylformamide, dimethylacetamide, N-methylpyrrolidone, ethylene carbonate or propylene carbonate.

In a preferred embodiment of the present invention, polyetheramine polyol (B) has a Hazen colour number (determined according to DIN ISO 6271 ASTM D 1209 in the range of from 100 to 600 (APHA), preferably up to 600. The Hazen colour number can preferably be determined by spectrophotometric means.

In one embodiment of the present invention, the OH number of polyetheramine polyol (B) is in the range of from 100 mg KOH/g to 600 mg KOH/g, for example, preferably 250 to 550 mg KOH/g, determined according to DIN 53240, part 2.

In one embodiment of the present invention, the amine number of polyetheramine polyol (B) is in the range of from 200 to 800 mg KOH/g, for example, preferably 250 to 700 mg KOH/g, most preferably 350 to 650 mg KOH/g, determined according to DIN EN ISO 9702.

In one embodiment of the present invention, branched polyetheramine polyol (B) has dynamic viscosity in the range of from 300 to 50,000 mPa·s, determined at 60 °C according to ASTM D7042, preferably from 350 to 50,000 mPa·s.

In one embodiment of the present invention, branched polyetheramine polyols (B) have a glass transition temperature of less than 50 °C, preferably less than 30 °C and more preferably less than 10 °C, determined by differential scanning calorimetry (DSC).

In one embodiment of the present invention, branched polyetheramine polyols (B) are selected from those reacted with a fatty acid, for example stearic acid or lauric acid or myristyl acid, or with a polyisobutylene succinic anhydride ("PIBSA") or with a fatty succinic anhydride made from an α-C₁₂-C₁₈-olefin with maleic anhydride, or with a fatty isocyanate. Examples of fatty isocyanates are stearic isocyanate, oleic isocyanate, tallow isocyanate, lauric isocyanate, palmitic isocyanate, and mixtures of at least two of the foregoing. Examples of α-C₁₂-C₁₈-olefins are CH₂=CH-n-C₁₀H₂₁, CH₂=CH-n-C₁₂H₂₅, CH₂=CH-n-C₁₄H₂₉, CH₂=CH-n-C₁₆H₃₁, and derivatives of the foregoing bearing an additional C-C double bond, for example CH₂=CH-n-C₁₄-alkenyl and CH₂=CH-n-C₁₆-alkenyl. In other embodiments, branched polyetheramine polyols (B) are used as such without any conversion with a fatty acid derivative.

In one embodiment of the present invention, inventive compositions additionally comprise (C) at least one anionic surfactant, hereinafter also being referred to as anionic surfactant (C).

Examples of anionic surfactants (C) are alkali metal and ammonium salts of C₈-C₁₈-alkyl sulfates, of C₈-C₁₈-fatty alcohol polyether sulfates, of sulfuric acid half-esters of ethoxylated C₄-C₁₂-alkylphenols (ethoxylation: 1 to 50 mol of ethylene oxide/mol), C₁₂-C₁₈ sulfo fatty acid alkyl esters, for example of C₁₂-C₁₈ sulfo fatty acid methyl esters, furthermore of C₁₂-C₁₈-alkylsulfonic acids and of C₁₀-C₁₈-alkylarylsulfonic acids. Preference is given to the alkali metal salts of the aforementioned compounds, particularly preferably the sodium salts.

Further examples of anionic surfactants (C) are soaps, for example the sodium or potassium salts of stearic acid, oleic acid, palmitic acid, ether carboxylates, and alkylether phosphates.

In a preferred embodiment of the present invention, anionic surfactant (C) is selected from compounds according to general formula (I)

R¹-O(CH₂CH₂O)ₓ-SO₃M (I)

wherein
- R¹: n-C₁₀-C₁₈-alkyl, especially with an even number of carbon atoms, for example n-decyl, n-dodecyl, n-tetradecyl, n-hexadecyl, or n-octadecyl, preferably C₁₀-C₁₄-alkyl, and even more preferably n-C₁₂-alkyl,
- x: being a number in the range of from 1 to 5, preferably 2 to 4 and even more preferably 3.
- M: being selected from alkali metals, preferably potassium and even more preferably sodium.

In anionic surfactant (C), x may be an average number and therefore n is not necessarily a whole number, while in individual molecules according to formula (I), x denotes a whole number.

In one embodiment of the present invention, inventive compositions may contain 0.1 to 60 % by weight of anionic surfactant (C), preferably 5 to 50 % by weight.

Inventive compositions may comprise ingredients other than the aforementioned. Examples are non-ionic surfactants, fragrances, dyestuffs, biocides, preservatives, enzymes, hydrotropes, builders, viscosity modifiers, polymers, buffers, defoamers, and anti-corrosion additives.

Preferred inventive compositions may contain one or more non-ionic surfactants.

Preferred non-ionic surfactants are alkoxylated alcohols, di- and multiblock copolymers of ethylene oxide and propylene oxide and reaction products of sorbitan with ethylene oxide or propylene oxide, alkyl polyglycosides (APG), hydroxyalkyl mixed ethers and amine oxides.

Preferred examples of alkoxylated alcohols and alkoxylated fatty alcohols are, for example, compounds of the general formula (II) 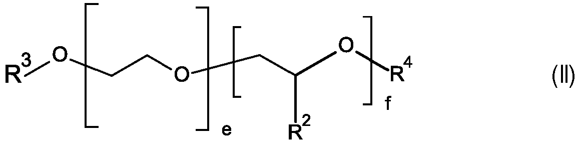 in which the variables are defined as follows:
- R²: is identical or different and selected from hydrogen and linear C₁-C₁₀-alkyl, preferably in each case identical and ethyl and particularly preferably hydrogen or methyl,
- R³: is selected from C₈-C₂₂-alkyl, branched or linear, for example n-C₈H₁₇, n-C₁₀H₂₁, n-C₁₂H₂₅, n-C₁₄H₂₉, n-C₁₆H₃₃ or n-C₁₈H₃₇,
- R⁴: is selected from C₁-C₁₀-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,

m and n are in the range from zero to 300, where the sum of n and m is at least one, preferably in the range of from 3 to 50. Preferably, m is in the range from 1 to 100 and n is in the range from 0 to 30.

In one embodiment, compounds of the general formula (II) may be block copolymers or random copolymers, preference being given to block copolymers.

Other preferred examples of alkoxylated alcohols are, for example, compounds of the general formula (III)

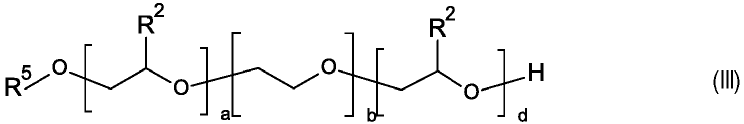

in which the variables are defined as follows:
- R²: is identical or different and selected from hydrogen and linear C₁-C₀-alkyl, preferably identical in each case and ethyl and particularly preferably hydrogen or methyl,
- R⁵: is selected from C₆-C₂₀-alkyl, branched or linear, in particular n-C₈H₁₇, n-C₁₀H₂₁, n-C₁₂H₂₅, n-C₁₃H₂₇, n-C₁₅H₃₁, n-C₁₄H₂₉, n-C₁₆H₃₃, n-C₁₈H₃₇,
- a: is a number in the range from zero to 10, preferably from 1 to 6,
- b: is a number in the range from 1 to 80, preferably from 4 to 20,
- d: is a number in the range from zero to 50, preferably 4 to 25.

The sum a + b + d is preferably in the range of from 5 to 100, even more preferably in the range of from 9 to 50.

Compounds of the general formula (III) may be block copolymers or random copolymers, preference being given to block copolymers.

Further suitable nonionic surfactants are selected from di- and multiblock copolymers, composed of ethylene oxide and propylene oxide. Further suitable nonionic surfactants are selected from ethoxylated or propoxylated sorbitan esters. Amine oxides or alkyl polyglycosides, especially linear C₄-C₁₆-alkyl polyglucosides and branched C₈-C₁₄-alkyl polyglycosides such as compounds of general average formula (VI) are likewise suitable. 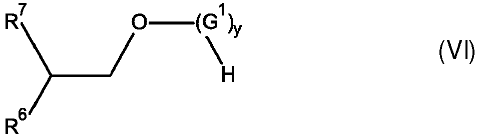 wherein:
- R⁶: is C₁-C₄-alkyl, in particular ethyl, n-propyl or isopropyl,
- R⁷: is -(CH₂)₂-R⁶,
- G¹: is selected from monosaccharides with 4 to 6 carbon atoms, especially from glucose and xylose,
- y: in the range of from 1.1 to 4, y being an average number,

Further examples of non-ionic surfactants are compounds of general formula (VII) and (VIII)

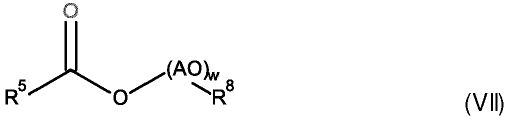

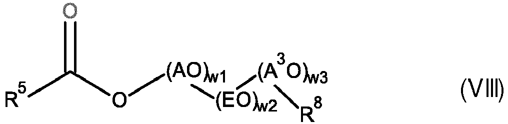

AO is selected from ethylene oxide, propylene oxide and butylene oxide,

EO is ethylene oxide, CH₂CH₂-O,

R⁸ selected from C₈-C₁₈-alkyl, branched or linear, and R⁵ is defined as above.
A³O is selected from propylene oxide and butylene oxide,
w is a number in the range of from 15 to 70, preferably 30 to 50,
w1 and w3 are numbers in the range of from 1 to 5, and
w2 is a number in the range of from 13 to 35.

An overview of suitable further nonionic surfactants can be found in EP-A 0 851 023 and in DE-A 198 19 187.

Mixtures of two or more different nonionic surfactants selected from the foregoing may also be present.

Other surfactants that may be present are selected from amphoteric (zwitterionic) surfactants and anionic surfactants and mixtures thereof.

Examples of amphoteric surfactants are those that bear a positive and a negative charge in the same molecule under use conditions. Preferred examples of amphoteric surfactants are socalled betaine-surfactants. Many examples of betaine-surfactants bear one quaternized nitrogen atom and one carboxylic acid group per molecule. A particularly preferred example of amphoteric surfactants is cocamidopropyl betaine (lauramidopropyl betaine).

Examples of amine oxide surfactants are compounds of the general formula (IX)

R⁹R¹⁰R¹¹N→O (IX)

wherein R⁹, R¹⁰, and R¹¹ are selected independently from each other from aliphatic, cycloaliphatic or C₂-C₄-alkylene C₁₀-C₂₀-alkylamid0 moieties. Preferably, R⁹ is selected from C₈-C₂₀-alkyl or C₂-C₄-alkylene C₁₀-C₂₀-alkylamid0 and R¹⁰ and R¹¹ are both methyl.

A particularly preferred example is lauryl dimethyl aminoxide, sometimes also called lauramine oxide. A further particularly preferred example is cocamidylpropyl dimethylaminoxide, sometimes also called cocamidopropylamine oxide.

In one embodiment of the present invention, inventive compositions may contain 0.1 to 60 % by weight of at least one surfactant, selected from non-ionic surfactants, amphoteric surfactants and amine oxide surfactants.

In a preferred embodiment, inventive solid detergent compositions for cleaners and especially those for automatic dishwashing do not contain any anionic surfactant.

Inventive compositions may contain at least one bleaching agent, also referred to as bleach. Bleaching agents may be selected from chlorine bleach and peroxide bleach, and peroxide bleach may be selected from inorganic peroxide bleach and organic peroxide bleach. Preferred are inorganic peroxide bleaches, selected from alkali metal percarbonate, alkali metal perborate and alkali metal persulfate.

Examples of organic peroxide bleaches are organic percarboxylic acids, especially organic percarboxylic acids.

In inventive compositions, alkali metal percarbonates, especially sodium percarbonates, are preferably used in coated form. Such coatings may be of organic or inorganic nature. Examples are glycerol, sodium sulfate, silicate, sodium carbonate, and combinations of at least two of the foregoing, for example combinations of sodium carbonate and sodium sulfate.

Suitable chlorine-containing bleaches are, for example, 1,3-dichloro-5,5-dimethylhydantoin, N-chlorosulfamide, chloramine T, chloramine B, sodium hypochlorite, calcium hypochlorite, magnesium hypochlorite, potassium hypochlorite, potassium dichloroisocyanurate and sodium dichloroisocyanurate.

Inventive compositions may comprise, for example, in the range from 3 to 10% by weight of chlorine-containing bleach.

Inventive compositions may comprise one or more bleach catalysts. Bleach catalysts can be selected from bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Inventive compositions may comprise one or more bleach activators, for example N-methylmor-pholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Further examples of suitable bleach activators are tetraacetylethylenediamine (TAED) and tetraacetylhexylenediamine.

Examples of fragrances are benzyl salicylate, 2-(4-tert.-butylphenyl) 2-methylpropional, commercially available as Lilial^{®}, and hexyl cinnamaldehyde.

Examples of dyestuffs are Acid Blue 9, Acid Yellow 3, Acid Yellow 23, Acid Yellow 73, Pigment Yellow 101, Acid Green 1, Solvent Green 7, and Acid Green 25.

Inventive compositions may contain one or more preservatives or biocides. Biocides and preservatives prevent alterations of inventive liquid detergent compositions due to attacks from microorganisms. Examples of biocides and preservatives are BTA (1,2,3-benzotriazole), benzalkonium chlorides, 1,2-benzisothiazolin-3-one ("BIT"), 2-methyl-2H-isothiazol-3-one ("MIT") and 5-chloro-2-methyl-2H-isothiazol-3-one ("CIT"), benzoic acid, sorbic acid, iodopropynyl butyl-carbamate ("IPBC"), dichlorodimethylhydantoine ("DCDMH"), bromochlorodimethylhydantoine ("BCDMH"), and dibromodimethylhydantoine ("DBDMH").

Examples of viscosity modifiers are agar-agar, carragene, tragacanth, gum arabic, alginates, pectins, hydroxyethyl cellulose, hydroxypropyl cellulose, starch, gelatin, locust bean gum, cross-linked poly(meth)acrlyates, for example polyacrlyic acid cross-linked with bis-(meth)acrylamide, furthermore silicic acid, clay such as - but not limited to - montmorrilionite, zeolite, dextrin, and casein.

Hydrotropes in the context with the present invention are compounds that facilitate the dissolution of compounds that exhibit limited solubility in water. Examples of hydrotropes are organic solvents such as ethanol, isopropanol, ethylene glycol, 1,2-propylene glycol, and further organic solvents that are water-miscible under normal conditions without limitation. Further examples of suitable hydrotropes are the sodium salts of toluene sulfonic acid, of xylene sulfonic acid, and of cumene sulfonic acid.

Examples of further useful enzymes other than lipase (A) are hydrolases, amylases, proteases, cellulases, hemicellulases, lipases, phospholipases, esterases, pectinases, lactases and peroxi-dases, and combinations of at least two of the foregoing types of the foregoing. Particularly useful enzymes other than lipase (A) are selected from are proteases, amylases, and cellulases. Examples of polymers other than polyetheramine polyol (B) are especially polyacrylic acid and its respective alkali metal salts, especially its sodium salt. A suitable polymer is in particular polyacrylic acid, preferably with an average molecular weight M_{w} in the range from 2,000 to 40,000 g/mol. preferably 2,000 to 10,000 g/mol, in particular 3,000 to 8,000 g/mol, each partially or fully neutralized with alkali, especially with sodium. Also of suitability are copolymeric polycarboxylates, in particular those of acrylic acid with methacrylic acid and of acrylic acid or methacrylic acid with maleic acid and/or fumaric acid. Polyacrylic acid and its respective alkali metal salts may serve as soil anti-redeposition agents.

Further examples of polymers are polyvinylpyrrolidones (PVP). Polyvinylpyrrolidones may serve as dye transfer inhibitors.

Further examples of polymers are polyethylene terephthalates, polyoxyethylene terphthalates, and polyethylene terephthalates that are end-capped with one or two hydrophilic groups per molecule, hydrophilic groups being selected from CH₂CH₂CH₂-SO₃Na, CH₂CH(CH₂-SO₃Na)₂, and CH₂CH(CH₂SO₂Na)CH₂-SO₃Na.

Examples of buffers are monoethanolamine and N,N,N-triethanolamine.

Examples of defoamers are silicones.

Inventive compositions are not only good in cleaning soiled laundry with respect to organic fatty soil such as oil. Inventive liquid detergent compositions are very useful for removing non-bleachable stains such as, but not limited to stains from red wine, tea, coffee, vegetables, and various fruit juices like berry juices from laundry. They still do not leave residues on the clothes.

In order to be suitable as liquid laundry compositions, inventive compositions may be in bulk form or as unit doses, for example in the form of sachets or pouches. Suitable materials for pouches are water-soluble polymers such as polyvinyl alcohol.

Inventive compositions display excellent fat removal behavior.

Another aspect of the present invention is related to branched polyetheramine polyols (B). Inventive polyetheramine polyols (B) have a polydispersity (M_{w}/Mₙ) in the range of from 5 to 25, preferably 5 to 20, and they are based on a polycondensation product of at least one trialkanolamine.

In one embodiment of the present invention, the number-average molar weight Mₙ of inventive polyetheramine polyols (B) is in the range of from 3,750 to 50,000 g/mol, preferably in the range of from 3,900 to 10,000 g/mol, as measured by means of gel permeation chromatography using hexafluoroisopropanol/0.05 % by weight CF₃COOK as the mobile phase and PMMA as standard.

In one embodiment of the present invention, the weight-average molar weight M_{w} of inventive polyetheramine polyol (B) is in the range of from 10,000 to 90,000 g/mol, preferably from 11,000 to 80,000 g/mol and even more preferred from 15,000 to 80,000 g/mol. M_{w} is advantageously determined by means of gel permeation chromatography using hexafluoroisopropanol/0.05 % by weight CF₃COOK as the mobile phase and PMMA as standard.

In one embodiment of the present invention, inventive polyetheramine polyols (B) are characterized in that trialkanolamines are selected from triethanolamine, triisopropanolamine and tri-n-propanolamine, and mixtures of at least two of triethanolamine, triisopropanolamine and tri-n-propanolamine.

In one embodiment of the present invention, the OH number of inventive polyetheramine polyol (B) is in the range of from 100 to 600 mg KOH/g, for example, preferably 250 to 550 mg KOH/g, determined according to DIN 53240, part 2.

More details of inventive polyetheramine polyols (B) have been described above.

Without wishing to be bound by any theory, it is believed that inventive polyetheramine polyols (B) bear a considerable share of N-morpholino groups, especially when based upon triethanol amine or triisopropanolamine.

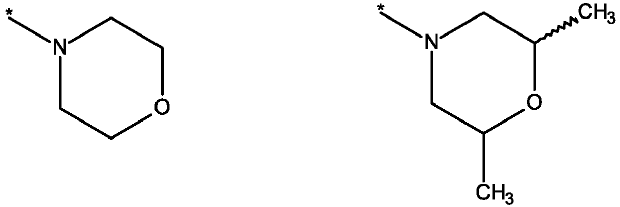

N-morpholino groups may be detected, e.g., by two-dimensional NMR spectroscopy (DOSY), HPLC and capillary electrophoresis separation. For this purpose, inventive polyetheramine polyols (B) are first separated in fractions and then the low molecular weight components and their elution time is compared to the one of well-known molecules with morpholino groups.

A further aspect of the present invention is a process for manufacturing inventive polyetheramine polyols (B), also being referred to as "inventive process". The inventive process comprises the step of subjecting at least one trialkanolamine to polycondensation under catalysis of at least one catalyst selected from H₃PO₃, H₃PO₄, and hypophosphorous acid (H₃PO₂), characterized in that the temperature during polycondensation does not exceed 215 °C, and that said polycondensation is carried out in an atmosphere of an inert gas.

Examples for inert gas are nitrogen and noble gases such as argon.

In order to carry out the inventive process, at least one trialkanolamines will be subjected to polycondensation, for example selected from tri-C₂-C₄-alkanol-amines, with the alkanol groups in trialkanolamine being different or preferably identical. Trialkanolamine can be subjected to polycondensation or to co-polycondensation, either with one or more trialkanolamine or with one or more dialkanolamines. Examples for suitable trialkanolamines are triethanolamine, tripropanolamine, triisopropanolamine and tributanolamine. Examples for suitable dialkanolamines are N,N-diethanolamine, N,N-di-n-propanolamine, N,N-diisopropanolamine, N,N-di-n-butanolamine, N,N'-C₂-C₈-ω-hydroxyalkylpiperidine, and polyetherols being based on ethylene oxide and/or propylene oxide.

In one embodiment of the present invention, polyetheramine polyol (B) can be obtained by polycondensation of at least one of triethanolamine, triisopropanolamine and tri-n-propanolamine, or mixtures of at least two of triethanolamine, triisopropanolamine and tri-n-propanolamine. Preference is given to make polyetheramine polyol (B) by polycondensation of either triethanolamine or triisopropanolamine or a mixture of triethanolamine and triisopropanolamine, without using a diol.

In the context with the present invention process, the term polycondensation also refers to co-polycondensation of more than one trialkanolamine and to co-polycondensations with at least one diol.

The catalyst, H₃PO₄ or H₃PO₃ or hypophosphorous acid (H₃PO₂), can be applied in bulk or as aqueous solution.

In one embodiment of the present invention, the catalyst, H₃PO₄ or H₃PO₃ or hypophosphorous acid (H₃PO₂), is added generally in an amount of 0.001 to 10 mole-%, preferably of 0.005 to 7, more preferably 0.01 to 5 mol-%, based on the amount of the trialkanolamine.

The inventive process can be carried out by using a solvent. Examples of solvents that can be used to perform the inventive process are aromatic and/or (cyclo)aliphatic hydrocarbons and their mixtures, halogenated hydrocarbons, ketones, esters, and ethers. Preference is given to aromatic hydrocarbons, (cyclo)aliphatic hydrocarbons, alkyl esters of alkanoic acids, ketones, alkoxylated alkyl esters of alkanoic acids, and mixtures thereof. Particularly preferred are monoalkylated or polyalkylated benzenes and naphthalenes, ketones, alkyl esters of alkanoic acids, and alkoxylated alkyl esters of alkanoic acids and mixtures thereof.

Preferred aromatic hydrocarbon mixtures are those predominantly comprising aromatic C₇ to C₁₄ hydrocarbons and possibly encompassing a boiling range from 110 to 300 °C, particular preference being given to toluene, o-, m- or p-xylene, trimethylbenzene isomers, tetramethylbenzene isomers, ethylbenzene, cumene, tetrahydronaphthalene, and mixtures comprising them. Examples thereof are the Solvesso^{®} grades from ExxonMobil Chemical, especially Solvesso^{®} 100 (CAS No. 64742-95-6, predominantly C₉ and C₁₀ aromatics, boiling range about 154 to 178 °C), 150 (boiling range about 182 -207°C), and 200 (CAS No. 64742-94-5), and also the Shellsol^{®} grades from Shell. Hydrocarbon mixtures comprising paraffins, cycloparaffins, and aromatics are also available commercially under the names Kristalloel (e.g., Kristalloel 30, boiling range about 158 to 198°C or Kristalloel 60: CAS No. 64742-82-1), white spirit (likewise, for example, CAS No. 64742-82-1) or solvent naphtha (light: boiling range about 155 to 180 °C, heavy: boiling range about 225 to 300 °C).

Halogenated hydrocarbons are, for example, chlorobenzene and dichlorobenzene or its isomer mixtures. The esters are, for example, n-butyl acetate, ethyl acetate, 1-methoxyprop-2-yl acetate, and 2-methoxyethyl acetate. The ethers are, for example, THF, dioxane, and the dimethyl, diethyl or di-n-butyl ethers of ethylene glycol.

Examples of ketones include acetone, 2-butanone, 2-pentanone, 3-pentanone, hexanone, isobutyl methyl ketone, heptanone, cyclopentanone, cyclohexanone or cycloheptanone.

Examples of (cyclo)aliphatic hydrocarbons are decalin, alkylated decalin, and isomer mixtures of linear or branched alkanes and/or cycloalkanes.

Preference is given, though, to not using a solvent for carrying out the inventive process.

The inventive process is carried out in a way that the temperature during polycondensation does not exceed 230 °C. For example, the polycondensation is carried out at temperatures in the range of from 150 to 230 °C, preferably 180 to 210 °C. Even more preferably, the temperature during polycondensation does not exceed 210 °C.

The inventive process is carried out in a way that the duration of the polycondensation is at least 18 hours, for example 18 to 36 hours, preferably 20 to 30 hours.

The inventive process can be carried out at a pressure in the range of from 0.5 bar to 20 bar, while normal pressure being preferred. In a preferred embodiment, the inventive process is being performed at normal pressure.

The inventive process is preferably followed by removal or blow-off of residual monomers, for example, by distilling them off at normal pressure or at reduced pressure, e. g., in the range of from 0.1 to 0.5 bar.

In one embodiment of the inventive process, water or other volatile products released during the polycondensation can be removed from the reaction mixture in order to accelerate the reaction, such removal being accomplished by distillation, for example, and optionally under reduced pressure. The removal of water or of other low molecular mass reaction by-products can also be assisted by passing through the reaction mixture a stream of gas which is substantially inert under the reaction conditions (stripping), such as nitrogen, for example, or a noble gas such as helium, neon or argon, for example.

Inventive polyetheramine polyols (B) that are prepared at up to 215 °C are typically stable at room temperature for a prolonged period, such as for at least 10 weeks, for example, without exhibiting instances of clouding, precipitation and/or significant increase in viscosity.

To terminate the polycondensation reaction of the inventive process there are a variety of options. For example, the temperature can be lowered to a range in which the reaction comes to a standstill and the polycondensation product is storage-stable. This is generally the case below 60 °C, preferably below 50 °C, more preferably below 40 °C, and very preferably at room temperature. Another option is to deactivate the catalyst by adding a basic component, a Lewis base or an organic or inorganic base, for example.

In one embodiment of the present invention, the polycondensation step takes place in stirred tank reactors or stirred tank reactor cascades.

In one embodiment of the present invention the inventive process will be carried out batch-wise, in semi-batch mode or continuously.

By the described inventive process, inventive polyetheramine polyols (B) can be obtained in sufficient purity. Through the aforementioned setting of the reaction conditions and, optionally, through the choice of appropriate solvent it is possible for the inventive polyetheramine polyols (B) to be processed further without additional purification.

By the inventive process, inventive polyetheramine polyols (B) can be obtained in excellent quality and yield. Inventive polyetheramine polyols (B) are well suited for making inventive compositions.

The present invention will be illustrated by working examples.

General remarks: The Hazen colour number was determined according to DIN ISO 6271, ASTM D 1209, with spectrophotometric detection. (2° norm observer, normal light, layer thickness 11 mm, against distilled water).

Molecular weight: by gel permeation chromatography using a refractometer as the detector. The mobile phase used was 0.05 % by weight CF₃COOK in hexafluoroisopropanol (HFIP), the standard employed for determining the molecular weight being polymethylmethacrylate (PMMA).

### I. Synthesis of inventive polyetheramine polyols (B) and comparison polyetheramine polyols 1.1 Synthesis of inventive polyetheramine polyol (B.1)

A four-neck flask equipped with stirrer, distillation bridge, gas inlet tube, and internal thermometer was charged with 2500 g triethanolamine ("TEA") and 70.78 g of a 50% by weight aqueous H₃PO₂, and the mixture so obtained was heated under nitrogen to 200°C. The reaction mixture was stirred at 200°C over a period of 22 ½ hours, during which the condensate formed in the reaction was removed by means of a moderate stream of N₂ as stripping gas via the distillation bridge. Toward the end of the indicated reaction time, the temperature was lowered to 140°C and residual monomer and other volatiles were removed under a pressure of 100 mbar.

Then, the reaction mixture was cooled to ambient temperature, and branched polytriethanol amine polyol (B.1) was obtained.
Mn = 3,980 g/mol, M_{w}= 41,300 g/mol
M_{w}/Mₙ = 10.4
OH number: 281 mg KOH/g
Dynamic viscosity at 23°C: 10700 mPa·s at a shear rate 1/100 sec

From the two-dimensional-NMR spectra (DOSY) of inventive polytriethanolamine polyol (B.1) it can be deducted that (B.1) contains morpholino groups.

### 1.2 Synthesis of inventive polyetheramine polyols (B.3) to (B.5) and of C-(B.2)

A four-neck flask equipped with stirrer, distillation bridge, gas inlet tube, and internal thermometer was charged with 2500 g triethanolamine ("TEA") and 70.78 g of a 50% by weight aqueous H₃PO₄, and the mixture so obtained was heated under nitrogen to 200°C. The reaction mixture was stirred at 200°C over a period of 26 hours, during which the condensate formed in the reaction is removed by means of a moderate stream of N₂ as stripping gas via the distillation bridge. Toward the end of the indicated reaction time, the temperature was lowered to 140°C and residual monomer and other volatiles were removed under a pressure of 100 mbar.

Aliquots were additionally taken after 15 hours, 21 hours and 20 minutes and 22 ½ hours

The analytical data of the aliquots are reported below:
Aliquot 1 (15 hours), inventive polyetheramine polyol C-(B.2)
Mn = 4,110 g/mol, M_{w} = 11,600 g/mol
M_{w}/Mₙ = 2.8
OH number: 542 mg KOH/g
Dynamic viscosity at 23°C: 7130 mPa·s 1/100 sec
Aliquot 2 (21 hours 20 minutes), inventive polyetheramine polyol (B.3)
Mn = 4,560 g/mol, M_{w} = 22,800 g/mol
M_{w}/Mₙ = 5.0
OH number: 416 mg KOH/g
Dynamic viscosity at 23°C: 14300 mPa·s 1/100 sec
Aliquot 3 (22 ½ hours), inventive polyetheramine polyol (B.4)
Mn = 4,560 g/mol, M_{w} = 28,400 g/mol
M_{w}/Mₙ = 6.2
OH number: 383 mg KOH/g
Dynamic viscosity at 23°C: 19700 mPa·s 1/100 sec
After a reaction time of 26 hours, the reaction mixture was cooled to ambient temperature, and inventive polytriethanolamine polyol (B.5) was obtained.
Mn = 4,650 g/mol, M_{w} = 78,500 g/mol
M_{w}/Mₙ = 16.9
OH number: 371 mg KOH/g

### 1.3 Synthesis of comparison polyetheramine polyol C-(B.6)

A four-neck flask equipped with stirrer, distillation bridge, gas inlet tube, and internal thermometer was charged with 1500 g triethanolamine ("TEA") and 20 g of a 50% by weight aqueous H₃PO₂, and the mixture so obtained was heated under nitrogen to 200 °C. The reaction mixture was stirred at 200 °C over a period of 15 ½ hours, during which the condensate formed in the reaction was removed by means of a moderate stream of N₂ as stripping gas via the distillation bridge. Toward the end of the reaction time indicated, the temperature was lowered to 140 °C and residual monomer and other volatiles were removed under a pressure of 100 mbar.

Then, the reaction mixture was cooled to ambient temperature, and polyetheramine polyol C-(B.6) was obtained.
Mn = 4,935 g/mol, M_{w} = 8,130 g/mol
M_{w}/Mₙ = 1.6
OH number: 620 mg KOH/g
Amine number: 431 mg KOH/g
Hazen colour number = 363 APHA
Dynamic viscosity at 60 °C: 431 mPa·s

### I.4 Synthesis of polyetheramine polyol (B.7)

A 2 L four-neck flask equipped with stirrer, distillation bridge, gas inlet tube, and internal thermometer was charged with 600 g polytriethanolamine (B.5) and heated to 50°C with an oil bath under stirring under N₂. Dropwise, 69.2 g of C₁₆/C₁₈-alkenyl succinic anhydride were added within 30 minutes under stirring at 50°C. The reaction mixture was then heated to 70°C and stirred at 70°C for two hours. Then, the external heating was removed and the still warm viscous polymer (B.7) was collected.

The following analytical data were obtained from (B.7):
OH number: 344 mg KOH/g
Acid number: 32 mg KOH/g

### I.5 Synthesis of polyetheramine polyol (B.8)

A 2 L four-neck flask equipped with stirrer, distillation bridge, gas inlet tube, and internal thermometer was charged with 600 g polytriethanolamine (B.5) and heated to 50°C with an oil bath under stirring under N₂. Dropwise, 138.3 g of C₁₆/C₁₈-alkenyl succinic anhydride were added within 30 minutes under stirring at 50°C. A slightly exothermic reaction was observed. The reaction mixture was then heated to 70°C and stirred at 70°C for two hours. Then, the external heating was removed and the still warm viscous polymer (B.8) was collected.

The following analytical data were obtained from (B.8):
OH number: 304 mg KOH/g
Acid number: 47 mg KOH/g

### II. Tests on detergency performance

General:
As lipase (A.1), commercially available lipase Lipex^{®} from Novozymes was used.

The primary wash performance of inventive polyetheramine polyols was tested in the launder-O-meter and in the washing machine preparing wash solutions using water of 14°dH hardness (2.5 mmol/L; Ca:Mg:HCO₃ 4:1:8) containing 2.5 g/L of the liquid test detergent L.1 (see composition in Table 1) and 4.0% of the branched polyetheramine polyol samples (B.1-B.6) in comparison with 4,0% of the narrowed polydisperse branched polyetheramine polyol samples (B.6) and/or in combination with 0.1% or 0.2% by weight Lipex^{®}.

| Table 1. L.1 IngredientsLiquid Detergent Formulation | |
|---|---|
| Alkylbenzene sulfonic acid (C₁₀-C₁₃), Na salt | 5.5% |
| C₁₃/C₁₅-Oxoalkohol reacted with 7 moles of EO | 5.4% |
| 1,2 propyleneglycol | 6% |
| ethanol | 2% |
| potassium coconut soap | 2.4% |
| NaOH | 2.2% |
| lauryl ether sulphate | 5.4% |
| Sodium citrate | 3% |
| Water | to 100% |

The first test was performed in a launder-O-meter (LP2 type from SDL Atlas, Inc.) with beakers of 1 L size. One wash cycle (60 min.) was run at 25°C containing the wash-solution (0.25 L) together with one multi-stain monitor (MS1) and a cotton ballast fabric of 2.5 g (fabric to liquor ratio of 1:10). After the 1 cycle, the multi stain monitor was rinsed in water, followed by drying at ambient room temperature overnight. The multi-stain monitors MS1 and MS2 (Table 2) contain respectively 8 and 4 standardized soiled fabrics, of respectively 5.0 x 5.0 cm and 4.5x4.5 cm size and stitched on two sides to a polyester carrier.

**Table 2. Multi-stain monitor used for evaluation of the cleaning performance**

| MS1: |
|---|
| CFT C-S-10: butterfat with colorant on cotton |
| CFT C-S-62: lard, colored on cotton |
| CFT C-S-78: soybean oil with pigment on cotton |
| EMPA 112: cocoa on cotton |
| EMPA 141/1: lipstick on cotton |
| EMPA 125: soiling on cotton fabric, sensitive to surfactants as well as to lipases wfk20D: pigment and sebum-type fat on polyester/cotton mixed fabric |
| CFT C-S-70: chocolate/mousse cream on cotton |

| MS2: |
|---|
| CFT C-S-10: butterfat with colorant on cotton |
| CFT C-S-62: lard, colored on cotton |
| CFT C-S-61: beef fat, colored on cotton |
| CFT PC-S-04: Saturated with colored olive oil on Polyester/Cotton (65/35). |

The total level of cleaning was evaluated using color measurements. Reflectance values of the stains on the monitors were measured using a sphere reflectance spectrometer (SF 500 type from Datacolor, USA, wavelength range 360-700nm, optical geometry d/8°) with a UV cutoff filter at 460 nm. In this case, with the aid of the CIE-Lab color space classification, the brightness L *, the value a * on the red - green color axis and the b * value on the yellow - blue color axis, were measured before and after washing and averaged for the 8 stains of the monitor. The change of the color value (Delta E, ΔE) value, defined and calculated automatically by the evaluation color tools on the following formula ΔE = Δ Delta a * 2 + Δ Delta b * 2 + Δ Delta L * 2, is a measure of the achieved cleaning effect. All experiments were repeated three times to yield an average number.

Higher Delta E values show better cleaning. For each stain, a difference of 1 unit can be detected visually by a skilled person. A non-expert can visually detect 2 units easily. The ΔE values of the formulations for the 8 stains of MS1 and for selected single stains are shown in Table 3. Calculation of ΔE values is software-based, and it occurs automatically. In the launder-O-meter results, there is a trend towards a better cleaning performance for the branched polyetheramine polyol samples with a broader polydispersity (>5).

**Table 3. Results of launder-O-meter test fabric monitor**

| Formulation L.1 plus | Total ΔE | ΔE (CFT C-S- 62) | ΔE (wfk20D) | ΔE (EMPA141/1) |
|---|---|---|---|---|
| --- | 137 | 33.0 | 11.6 | 12.8 |
| 0.1% (A.1) | 147 | 34.5 | 13.6 | 15.3 |
| 4.0% C-(B.2) | 147 | 32.5 | 11.6 | 12.7 |
| 4.0% (B.3) | 149 | 33.5 | 13.0 | 14.5 |
| 4.0% (B.4) | 149 | 34.0 | 13.5 | 13.9 |
| 4.0% (B.1) | 152 | 36.0 | 15.0 | 16.6 |
| 4.0% (B.5) | 154 | 37.0 | 15.5 | 17.1 |
| 4.0% C-(B.6) | 146 | 32.0 | 12.0 | 12.5 |

A second test was performed in a washing machine (Miele SOFTTRONIC W 1935 WTL, 30°C, short program, 1200 rpm, 3.5 kg ballast load), where two multistain monitors (MS1 and MS2) were washed together with four SBL-2004 sheets (wfk Testgewebe GmbH, DE; corresponding to 32 grams of ballast soil) as additional soil ballast.

The ΔE values of the formulations for the 8 and 4 stains of correspondingly MS1 and MS2 and for selected single stains are shown in Table 4. In the washing machine results, an additional cleaning performance benefit by combining the broader branched polyetheramine polyol samples with Lipase can be demonstrated.

**Table 4. Results of washing machine test fabric monitors**

| Formulation L.1 plus | Total ΔE MS1 | Total ΔE MS2 | ΔE (CFT C-S-61) MS2 | ΔE (CFT CS-62) MS1 |
|---|---|---|---|---|
| --- | 145 | 95 | 33 | 32 |
| 0.1% (A.1) | 162 | 105 | 35 | 32.5 |
| 0.2% (A.1) | 163 | 105 | 37 | 34 |
| 4% (B.1) | 162 | 104 | 37 | 34 |
| 0.1% (A.1) + 4% (B.1) | 170 | 111 | 41 | 35 |
| 0.2% (A.1) + 4% (B.1) | 174 | 121 | 43 | 38 |

## Claims

1. Composition comprising
(A) at least one lipase,
(B) at least one branched polyetheramine polyol with a polydispersity (M_{w}/Mₙ) in the range of from 5 to 25, wherein said branched polyetheramine polyol is based on a polycondensation product of at least one trialkanolamine.

2. Composition according to claim 1 wherein said composition comprises a lipase (A) that is selected from serine hydrolases.

3. Composition according to claim 1 or 2 wherein said branched polyetheramine polyol (B) has an average molecular weight M_{w} in the range of from 11,000 to 80,000 g/mol.

4. Composition according to any of the preceding claims wherein said composition comprises
(C) at least one anionic surfactant.

5. Composition according to any of the preceding claims wherein such composition is geltype or liquid at ambient temperature.

6. Composition according to any of the preceding claims wherein said compositions additionally comprises a protease.

7. Composition according to any of the preceding claims wherein trialkanolamines are selected from triethanolamine, triisopropanolamine and tri-n-propanolamine, and mixtures of at least two of triethanolamine, triisopropanolamine and tri-n-propanolamine.

8. Use of a composition according to any of the preceding claims for laundry care.

9. Branched polyetheramine polyol with a polydispersity (M_{w}/Mₙ) in the range of from 5 to 25, wherein said branched polyetheramine polyol is based on a polycondensation product of at least one trialkanolamine.

10. Branched polyetheramine polyol according to claim 9 wherein such branched polyether amine has an average molecular weight M_{w} in the range of from 11,000 to 80,000 g/mol.

11. Branched polyetheramine polyol according to claim 9 or 10 wherein trialkanolamines are selected from triethanolamine, triisopropanolamine and tri-n-propanolamine, and mixtures of at least two of triethanolamine, triisopropanolamine and tri-n-propanolamine.

12. Process for making branched polyetheramine polyols according to any of claims 9 to 11 comprising the step of subjecting at least one trialkanolamine to polycondensation under catalysis of at least one catalyst selected from H₃PO₄ and hypophosphorous acid (H₃PO₂), **characterized in that** the temperature during polycondensation does not exceed 220 °C, and that the duration of the polycondensation is at least 18 hours.

13. Process according to claim 12, **characterized in that** the polycondensation is carried out at a temperature in the range of from 150 to 230 °C.

14. Process according to claim 12 or 13 wherein the water formed during the reaction is removed from the reaction mixture.

## Patentansprüche

1. Zusammensetzung, umfassend
(A) mindestens eine Lipase,
(B) mindestens ein verzweigtes Polyetheraminpolyol mit einer Polydispersität (M_{w}/Mₙ) im Bereich von 5 bis 25, wobei das verzweigte Polyetheraminpolyol auf einem Polykondensationsprodukt mindestens eines Trialkanolamins basiert.

2. Zusammensetzung nach Anspruch 1, wobei die Zusammensetzung eine Lipase (A), die aus Serinhydrolasen ausgewählt ist, umfasst.

3. Zusammensetzung nach Anspruch 1 oder 2, wobei das verzweigte Polyetheraminpolyol (B) ein mittleres Molekulargewicht M_{w} im Bereich von 11.000 bis 80.000 g/mol aufweist.

4. Zusammensetzung nach einem der vorhergehenden Ansprüche, wobei die Zusammensetzung (C) mindestens ein anionisches Tensid umfasst.

5. Zusammensetzung nach einem der vorhergehenden Ansprüche, wobei die Zusammensetzung bei Umgebungstemperatur gelartig oder flüssig ist.

6. Zusammensetzung nach einem der vorhergehenden Ansprüche, wobei die Zusammensetzung zusätzlich eine Protease umfasst.

7. Zusammensetzung nach einem der vorhergehenden Ansprüche, wobei die Trialkanolamine aus Triethanolamin, Triisopropanolamin und Tri-n-propanolamin und Mischungen von mindestens zwei von Triethanolamin, Triisopropanolamin und Tri-n-propanolamin ausgewählt sind.

8. Zusammensetzung nach einem der vorhergehenden Ansprüche für die Wäschepflege.

9. Verzweigtes Polyetheraminpolyol mit einer Polydispersität (M_{w}/Mₙ) im Bereich von 5 bis 25, wobei das verzweigte Polyetheraminpolyol auf einem Polykondensationsprodukt mindestens eines Trialkanolamins basiert.

10. Verzweigtes Polyetheraminpolyol nach Anspruch 9, wobei ein derartiges verzweigtes Polyetheramin ein mittleres Molekulargewicht M_{w} im Bereich von 11.000 bis 80.000 g/mol aufweist.

11. Verzweigtes Polyetheraminpolyol nach Anspruch 9 oder 10, wobei die Trialkanolamine aus Triethanolamin, Triisopropanolamin und Tri-n-propanolamin und Mischungen von mindestens zwei von Triethanolamin, Triisopropanolamin und Tri-n-propanolamin ausgewählt sind.

12. Verfahren zur Herstellung von verzweigten Polyetheraminpolyolen nach einem der Ansprüche 9 bis 11, bei dem man mindestens ein Trialkanolamin einer Polykondensation unter Katalyse mindestens eines aus H₃PO₄ und Hypophosphorsäure (H₃PO₂) unterwirft, **dadurch gekennzeichnet, dass** die Temperatur während der Polykondensation 220 °C nicht überschreitet und dass die Dauer der Polykondensation mindestens 18 Stunden beträgt.

13. Verfahren nach Anspruch 12, **dadurch gekennzeichnet, dass** die Polykondensation bei einer Temperatur im Bereich von 150 bis 230 °C durchgeführt wird.

14. Verfahren nach Anspruch 12 oder 13, wobei das bei der Reaktion gebildete Wasser aus der Reaktionsmischung entfernt wird.

## Revendications

1. Composition comprenant
(A) au moins une lipase,
(B) au moins un polyétheramine polyol ramifié doté d'une polydispersité (M_{w}/Mₙ) dans la plage allant de 5 à 25, ledit polyétheramine polyol ramifié étant basé sur un produit de polycondensation d'au moins une trialcanolamine.

2. Composition selon la revendication 1, ladite composition comprenant une lipase (A) qui est choisie parmi des sérine hydrolases.

3. Composition selon la revendication 1 ou 2, ledit polyétheramine polyol ramifié (B) possédant un poids moléculaire moyen M_{w} dans la plage allant de 11 000 à 80 000 g/mole.

4. Composition selon l'une quelconque des revendications précédentes, ladite composition comprenant
(C) au moins un tensioactif anionique.

5. Composition selon l'une quelconque des revendications précédentes, une telle composition étant de type gel, ou liquide à température ambiante.

6. Composition selon l'une quelconque des revendications précédentes, lesdites compositions comprenant de plus une protéase.

7. Composition selon l'une quelconque des revendications précédentes, les trialcanolamines étant choisies parmi la triéthanolamine, la triisopropanolamine et la tri-n-propanolamine, et des mélanges d'au moins deux parmi la triéthanolamine, la triisopropanolamine et la tri-n-propanolamine.

8. Utilisation d'une composition selon l'une quelconque des revendications précédentes pour l'entretien du linge.

9. Polyétheramine polyol ramifié doté d'une polydispersité (M_{w}/Mₙ) dans la plage allant de 5 à 25, ledit polyétheramine polyol ramifié étant basé sur un produit de polycondensation d'au moins une trialcanolamine.

10. Polyétheramine polyol ramifié selon la revendication 9, une telle polyétheramine ramifiée possédant un poids moléculaire moyen M_{w} dans la plage allant de 11 000 à 80 000 g/mole.

11. Polyétheramine polyol ramifié selon la revendication 9 ou 10, les trialcanolamines étant choisies parmi la triéthanolamine, la triisopropanolamine et la tri-n-propanolamine, et des mélanges d'au moins deux parmi la triéthanolamine, la triisopropanolamine et la tri-n-propanolamine.

12. Procédé pour la préparation de polyétheramine polyols ramifiés selon l'une quelconque des revendications 9 à 11 comprenant l'étape de soumission d'au moins une trialcanolamine à une polycondensation sous catalyse d'au moins un catalyseur choisi parmi H₃PO₄ et l'acide hypophosphoreux (H₃PO₂), **caractérisé en ce que** la température pendant la polycondensation ne dépasse pas 220 °C, et que la durée de la polycondensation est d'au moins 18 heures.

13. Procédé selon la revendication 12, **caractérisé en ce que** la polycondensation est mise en œuvre à une température dans la plage allant de 150 à 230 °C.

14. Procédé selon la revendication 12 ou 13, l'eau formée pendant la réaction étant éliminée du mélange réactionnel.
